# EUROPEAN PATENT SPECIFICATION

(11) **EP 2 955 049 B1**
(45) Date of publication and mention of the grant of the patent: **16.11.2016**
(21) Application number: 15171040.7
(22) Date of filing: 08.06.2015
(51) Int. Cl.: B60K 7/00, B60K 17/04

(54) **MOTORIZED WHEEL**
MOTORISIERTES RAD
ROUE MOTORISÉE

(30) Priority: 10.06.2014 IT PD20140143
(43) Date of publication of application: 16.12.2015
(73) Proprietor: Amer S.p.A., 36078 Valdagno (VI) (IT)
(72) Inventor: BATTISTELLA, Francesco, 36078 Valdagno VI (IT); DALLA COSTA, Mirko, 36015 Schio VI (IT)
(74) Representative: Modiano, Micaela Nadia

(56) References cited:
- DE-A1- 10 132 319
- US-A1- 2004 112 656

## Description

The present invention relates to a motorized wheel.

Currently, floor scrubbing machines, industrial sweepers, electric trucks for transporting loads inside warehouses are usually provided with a plurality of so-called motorized wheels.

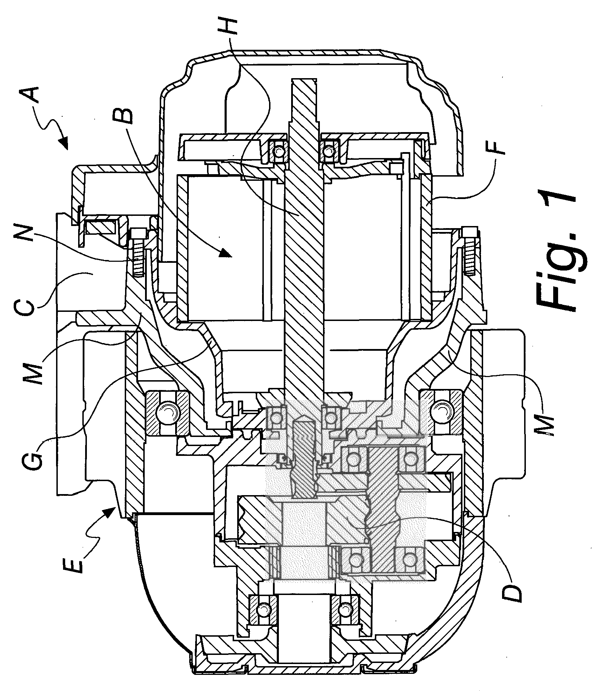

Figure 1 is a sectional view of a conventional motorized wheel, which comprises the features mentioned in the preamble of claim 1, designated therein by the reference letter A.

This motorized wheel A is a motorized wheel comprising an electric motor B, for example, but not exclusively, a direct-current motor, supported by a fixing bracket C, for fixing the motorized wheel to the structure of a truck or a scrubbing machine or another machine that includes it; the electric motor B is adapted to rotate, by way of rotation rate reduction means D, an internally hollow wheel E that is contoured to contain at least partly said electric motor B and the rotation rate reduction means D; the electric motor B comprises, as known, a stator casing F, which supports a plurality of permanent magnets, a brush-holder dome G, and a rotor which is internal to said stator casing F; the shaft H of said rotor is illustrated.

In currently known motorized wheels, usually the dome G and the stator casing F are fixed to an annular portion M of the fixing bracket C by means of threaded elements N, as shown in Figure 1.

This current solution for the assembly and fixing of the assembly of the brush-holder dome G and the stator casing F to the bracket C by means of screws entails the specific arrangement of the dome component G on which the stator casing F is to be fixed; since said stator casing F is metallic and has to have a precise cylindrical geometry for reasons of magnetic flux containment, it cannot be deformed in order to be fixed directly to the bracket C.

The provision of the adapted brush-holder dome component G and its assembly to the bracket C by means of screws are activities that entail costs both in terms of components and in terms of assembly times, as well as dedicated labor costs.

The aim of the present invention is to provide a motorized wheel capable of obviating the cited limitations of the background art.

In particular, the aim of the invention is to provide a motorized wheel that has reduced components and simplified assembly.

Another object of the invention is to provide a motorized wheel having a modifiable axial volume in order to adapt better to the assembly spaces available.

Yet another object of the invention is to provide a motorized wheel the functionality of which is not lower than that of known motorized wheels.

This aim and these and other objects that will become better apparent hereinafter are achieved by a motorized wheel, of the type comprising an electric motor supported by a fixing bracket and adapted to support rotationally, by way of means for reducing the rotation rate, an internally hollow wheel that is contoured to contain at least partly said electric motor and said rotation rate reduction means, said electric motor comprising a stator casing, a dome and a rotor which is internal to said stator casing, said motorized wheel being characterized in that said stator casing is inserted in a corresponding complementarily shaped annular portion that extends from said bracket and is fixed thereto by interference.

Further characteristics and advantages of the invention will become better apparent from the description of a preferred but not exclusive embodiment of the motorized wheel according to the invention, illustrated by way of non-limiting example in the accompanying drawings, wherein:
Figure 1 is a sectional side view of a conventional motorized wheel;

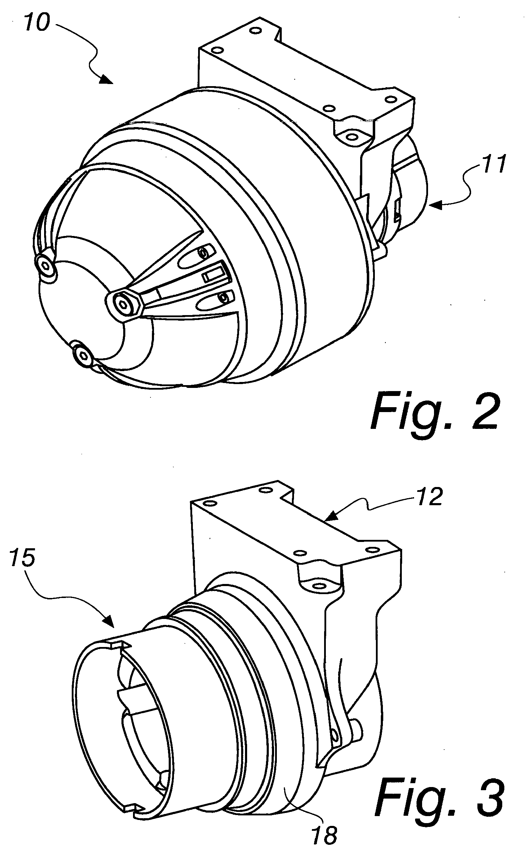

Figure 2 is a perspective view of a motorized wheel according to the invention;
Figure 3 is a perspective view of a detail of the motorized wheel according to the invention;

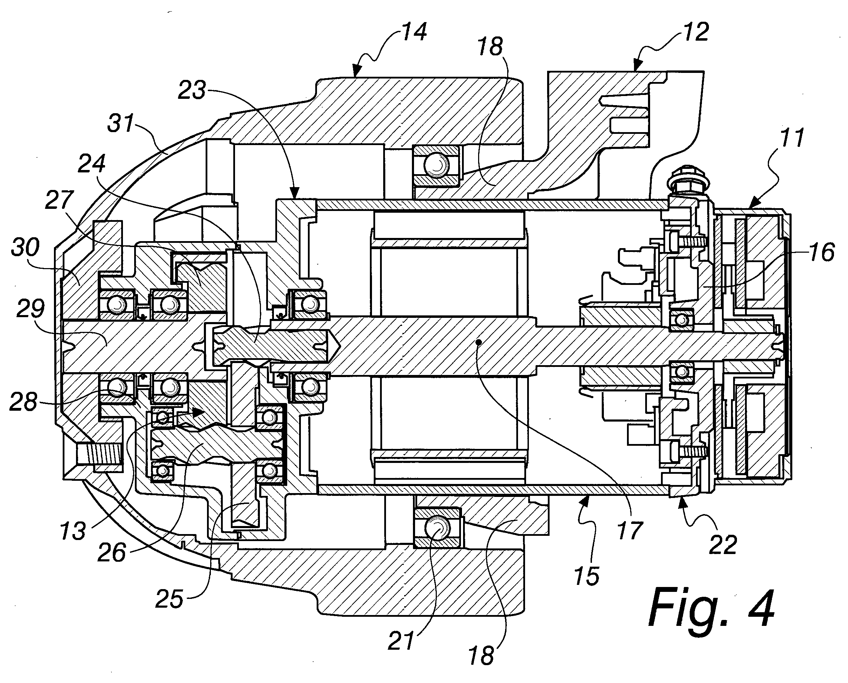

Figure 4 is a sectional side view of the motorized wheel according to the invention;
Figure 5 is a sectional side view of the detail of Figure 3;
Figures 6 and 7 are each a view of a different setup of the motorized wheel according to the invention.

With reference to the figures, a motorized wheel according to the invention is generally designated by the reference numeral 10.

The motorized wheel 10 is of the type comprising an electric motor 11, for example, but not exclusively, a direct-current motor, supported by a fixing bracket 12, adapted to support rotationally, by way of means 13 for reducing the rotation rate, an internally hollow wheel 14 that is contoured to contain partly the electric motor 11 and the rotation rate reduction means 13.

The electric motor 11 comprises a stator casing 15, for example, but not exclusively, a stator casing supporting a plurality of permanent magnets, and a dome 16, for example a brush-holder dome, and a rotor which is internal to said stator casing 15, of which, for sake of simplicity, only the shaft 17 is shown.

The particularity of the motorized wheel 10 according to the invention resides in that the stator casing 15 is inserted in a corresponding complementarily shaped annular portion 18 that extends from the bracket 12, in a single body therewith, and is fixed to the annular portion 18 by interference.

The stator casing 15 is constituted by a tubular cylinder made of metallic material.

In particular, the interference is obtained by hot-keying the stator casing 15, made of metallic material, in the annular portion 18 of the bracket 12, also made of metallic material, for example aluminum.

A method for fixing by interference the stator casing 15 to the fixing bracket 12 comprises therefore the following operations.

The bracket 12, with the annular portion 18, is heated so as to allow the insertion of the stator casing 15 in the annular portion 18.

Once the stator casing and the annular portion have been coupled, one proceeds to cool the annular portion 18, which tightens onto the stator casing 15, producing fixing by interference.

This mechanical coupling ensures both resistance to the torque transmitted by the electric motor and the electrical proprieties of the magnetic flux that are typical of the stator casing 15.

As an alternative, interference is obtained by cold keying; in this case one operates by inserting the casing of the electric motor 11 in the annular portion 18 of the bracket 12, applying a preset pressure and thus producing fixing by interference.

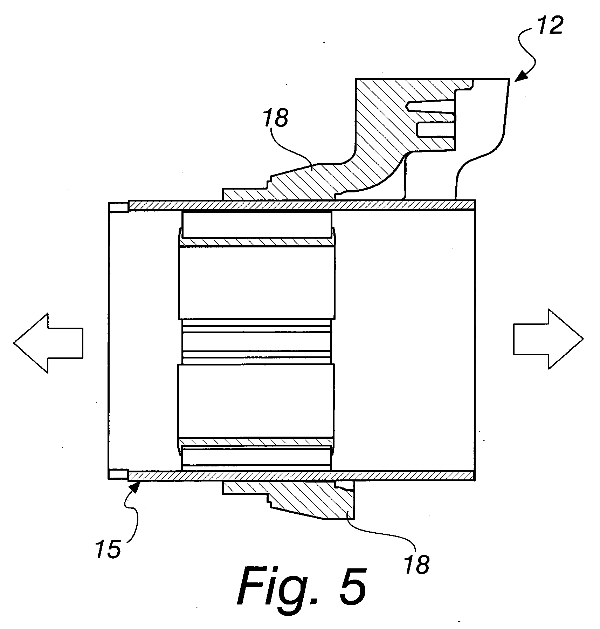

Figure 5 clearly shows that with this system for fixing by interference, the position in the axial direction of the stator casing 15 with respect to the bracket 12 can be different according to the volumes that one intends to provide.

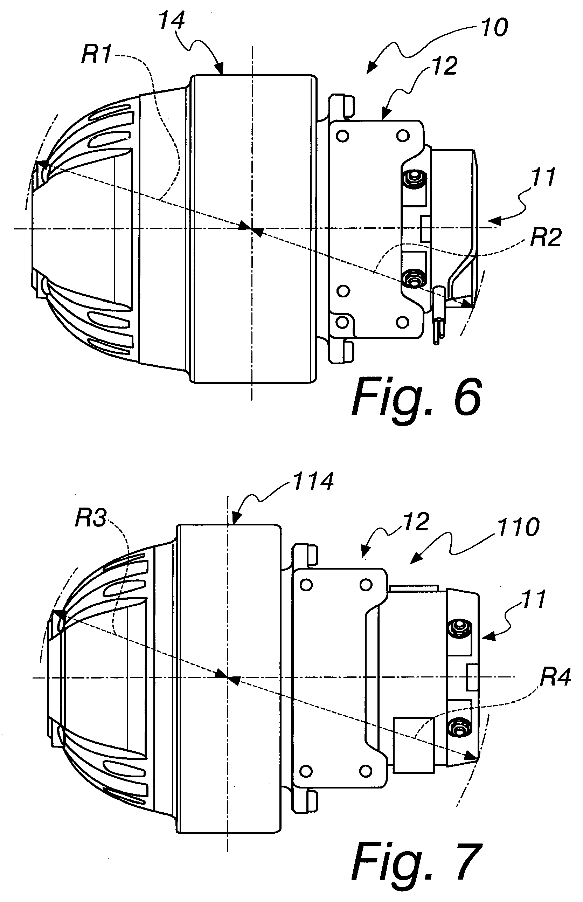

Figure 6 shows a motorized wheel with the stator casing, and therefore the electric motor 11, arranged with respect to the bracket 12 so as to have a motorized wheel 10 having a volume defined by a so-called first radius of curvature R1 and by a second radius of curvature R2, centered in the intersection of the tread axis and in the rotation axis of the electric motor.

Figure 7 shows the same motorized wheel 110 with the stator casing, and therefore the electric motor 11, arranged more externally with respect to the bracket 12, so as to have a motorized wheel 110 having a volume defined by a so-called first radius of curvature R3 and by a second radius of curvature R4, with R3 smaller than R1 and R4 greater than R2 as in Figures 6 and 7.

Therefore, by simply modifying the relative position of the bracket 12 and the stator casing 15 it is possible to provide models of motorized wheel having different volumes, according to the assembly needs and requirements.

The hollow wheel 14 rests on the underlying annular portion 18 of the bracket 12 by interposition of friction reduction means, such as a ball bearing 21.

The stator casing 15 is closed by two covers, a first external cover 22, which in the present example of DC electric motor 11 comprises the brush-holder dome 16, and a second internal cover 23, which contoured on the opposite side with respect to the electric motor 11, in order to support a portion of the rotation rate reduction means 13.

The same structure that comprises a stator casing with two covers is obviously to be understood as referable also to an AC electric motor of a constructive variation of a motorized wheel according to the invention; a variation that is not illustrated for the sake of simplicity.

The rotation rate reduction means 13 comprise a first pinion 24, which is fixed to the end of the shaft 17 of the electric motor 11, a first reduction gear 25, the axis of which is parallel to the axis of the electric motor 11, which in turn supports coaxially a second pinion 26 that meshes with a second reduction gear 27 which is coaxial to the shaft 17 of the electric motor 11.

The second reduction gear 27 is supported by a case 28 for protecting the rotation rate reduction means 13; the case 28 is fixed to the second cover 23.

A wheel supporting flange 30 is fixed on the rotation shaft 29 of the second reduction gear 27 and an external dome 31 is fixed to said flange and in turn is integral with the hollow wheel 14 for transmitting thereto the rotation.

In practice it has been found that the invention achieves the intended aim and objects.

In particular, the invention provides a motorized wheel which, thanks to the fixing by interference of the stator casing in the annular portion of the bracket, allows to eliminate any fixing with screws between the bracket and the electric motor.

Moreover, the invention provides a motorized wheel that can be assembled without the intermediate component typical of motorized wheels of the known type, since the stator casing is fixed directly to the bracket, with consequent saving in terms of components as well as of assembly times.

Furthermore, the invention provides a motorized wheel in which the fixing of the rotation rate reduction means directly to the stator casing allows better centering of the first pinion, fixed to the motor shaft, with respect to the first reduction gear; in the background art described above, the bracket is interposed between the stator casing and the reduction means, with consequent centering errors that are inherent in the production process.

Moreover, thanks to this technical solution, the invention has developed a motorized wheel that can be assembled with an important reduction of assembly times with respect to motorized wheels of the known type.

The motorized wheel according to the invention is consequently also lighter than similar motorized wheels of the known type.

Further, the invention provides a motorized wheel that is easy to assemble so as to originate different models simply by modifying the fixing position of the stator casing with respect to the fixing bracket.

Therefore, the variability of arrangement of the casing allows to manage in a very flexible manner the radius of curvature of the motorized wheel according to the customer's requirements, simply by translating said casing axially.

The invention thus conceived is susceptible of numerous modifications and variations, all of which are within the scope of the appended claims; all the details may further be replaced with other technically equivalent elements.

In practice, the components and the materials used, so long as they are compatible with the specific use, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A motorized wheel (10), of the type comprising an electric motor (11) supported by a fixing bracket (12), adapted to support rotationally, by way of means (13) for reducing the rotation rate, an internally hollow wheel (14) that is contoured to contain at least partly said electric motor (11) and said rotation rate reduction means (13), said electric motor (11) comprising a stator casing (15), a dome (16) and a rotor which is internal to said stator casing (15), said motorized wheel being **characterized in that** said stator casing (15) is inserted in a corresponding complementarily shaped annular portion (18) that extends from said bracket (12) and is fixed thereto by interference.

2. The motorized wheel according to claim 1, **characterized in that** said stator casing (15) is constituted by a tubular cylinder made of metallic material.

3. The motorized wheel according to one or more of the preceding claims, **characterized in that** said bracket (12) is in a single body with said annular portion (18) and is made of metallic material, for example aluminum.

4. The motorized wheel according to one or more of the preceding claims, **characterized in that** said interference is obtained by hot-keying the stator casing (15) in the annular portion (18) of the bracket (12).

5. A method for fixing by interference a stator casing (15) of an electric motor (11) to a fixing bracket (12) of a motorized wheel (10) according to the preceding claims, comprising the following steps:
- heating the bracket (12), with the annular portion (18), so as to allow the insertion of the stator casing (15) in the annular portion (18),
- once the stator casing (15) and the annular portion (18) are mated, proceeding with the cooling of the annular portion (18), which tightens onto the stator casing (15), producing fixing by interference.

6. The method for fixing by interference a stator casing (15) of an electric motor (11) to a fixing bracket (12) of a motorized wheel (10) according to claims 1 to 4, **characterized in that** said interference is obtained by cold keying, by inserting the casing of said electric motor (11) in said annular portion (18) of said bracket (12) and applying a preset pressure.

## Patentansprüche

1. Ein motorisiertes Rad (10) von der Art, die einen Elektromotor (11) umfasst, getragen von einer Befestigungsklammer (12), ausgebildet, um drehend, mit Hilfe von Mitteln (13) zur Reduzierung der Rotationsgeschwindigkeit, ein innen hohles Rad (14) zu tragen, das geformt ist, um zumindest teilweise den Elektromotor (11) und die Rotationsgeschwindigkeit-Reduktionsmittel (13) aufzunehmen, wobei der Elektromotor (11) ein Statorgehäuse (15), einen Dom (16) und einen Rotor umfasst, der sich innerhalb des Statorgehäuses (15) befindet, wobei das motorisierte Rad **dadurch gekennzeichnet ist, dass** das Statorgehäuse (15) in einen entsprechenden komplementär geformten ringförmigen Abschnitt (18) eingesetzt ist, der sich von der Klammer (12) erstreckt und daran durch Eingriff befestigt ist.

2. Das motorisierte Rad gemäß Anspruch 1, **dadurch gekennzeichnet, dass** das Statorgehäuse (15) aus einem rohrförmigen Zylinder besteht, der aus Metallmaterial hergestellt ist.

3. Das motorisierte Rad gemäß einem oder mehreren der obigen Ansprüche, **dadurch gekennzeichnet, dass** die Klammer (12) einteilig mit dem ringförmigen Abschnitt (18) ist und aus Metallmaterial, zum Beispiel Aluminium, besteht.

4. Das motorisierte Rad gemäß einem oder mehreren der obigen Ansprüche, **dadurch gekennzeichnet, dass** das Eingreifen erzielt wird durch Heißverkeilen des Statorgehäuses (15) in dem ringförmigen Abschnitt (18) der Klammer (12).

5. Ein Verfahren zur Befestigung, durch Eingriff, eines Statorgehäuses (15) eines Elektromotors (11) an einer Befestigungsklammer (12) eines motorisierten Rades (10) gemäß den obigen Ansprüchen, das folgende Schritte umfasst:
- Erhitzen der Klammer (12) mit dem ringförmigen Abschnitt (18), um das Einsetzen des Statorgehäuses (15) in den ringförmigen Abschnitt (18) zu ermöglichen,
- sobald das Statorgehäuse (15) und der ringförmige Abschnitt (18) verbunden sind, Fortsetzen mit der Kühlung des ringförmigen Abschnitts (18), der sich um das Statorgehäuse (15) verengt und so eine Befestigung durch Eingriff erzeugt.

6. Das Verfahren zur Befestigung, durch Eingreifen, eines Statorgehäuses (15) eines Elektromotors (11) an einer Befestigungsklammer (12) eines motorisierten Rades (10) gemäß Anspruch 1 bis 4, **dadurch gekennzeichnet, dass** das Eingreifen erzielt wird durch Kaltverkeilen, durch Einsetzen des Gehäuses des Elektromotors (11) in den ringförmigen Abschnitt (18) der Klammer (12) und durch Ausüben eines voreingestellten Drucks.

## Revendications

1. Roue motorisée (10), du type comprenant un moteur électrique (11) supporté par un étrier de fixation (12), adapté de façon à supporter en rotation, à l'aide de moyens (13) pour réduire la vitesse de rotation, une roue intérieurement creuse (14) qui a un contour permettant de contenir au moins partiellement ledit moteur électrique (11) et lesdits moyens de réduction de vitesse de rotation (13), ledit moteur électrique (11) comprenant un boîtier de stator (15), un dôme (16) et un rotor qui est intérieur audit boîtier de stator (15), ladite roue motorisée étant **caractérisée en ce que** ledit boîtier de stator (15) est inséré dans une partie annulaire de forme complémentaire correspondante (18) qui s'étend à partir dudit étrier (12) et qui est fixée à celui-ci par interférence.

2. Roue motorisée selon la revendication 1, **caractérisée en ce que** ledit boîtier de stator (15) est constitué par un cylindre tubulaire réalisé en un matériau métallique.

3. Roue motorisée selon l'une ou plusieurs des revendications précédentes, **caractérisée en ce que** ledit étrier (12) se présente sous la forme d'un corps unique avec ladite partie annulaire (18), et est réalisé en un matériau métallique, par exemple l'aluminium.

4. Roue motorisée selon l'une ou plusieurs des revendications précédentes, **caractérisée en ce que** ladite interférence est obtenue par calage à chaud du boîtier de stator (15) dans la partie annulaire (18) de l'étrier (12) .

5. Procédé pour fixer par interférence un boîtier de stator (15) d'un moteur électrique (11) à un étrier de fixation (12) d'une roue motorisée (10) selon les revendications précédentes, comprenant les étapes suivantes :
- chauffer l'étrier (12), avec la partie annulaire (18), de façon à permettre l'insertion du boîtier de stator (15) dans la partie annulaire (18),
- une fois que le boîtier de stator (15) et la partie annulaire (18) sont accouplés, poursuivre avec le refroidissement de la partie annulaire (18), qui se serre sur le boîtier de stator (15), produisant une fixation par interférence.

6. Procédé pour fixer par interférence un boîtier de stator (15) d'un moteur électrique (11) à un étrier de fixation (12) d'une roue motorisée (10) selon les revendications 1 à 4, **caractérisé en ce que** ladite interférence est obtenue par calage à froid, par insertion du boîtier dudit moteur électrique (11) dans ladite partie annulaire (18) dudit étrier (12) et application d'une pression pré-établie.
